# EUROPEAN PATENT APPLICATION

(11) **EP 1 842 690 A2**
(43) Date of publication of application: **10.10.2007**
(21) Application number: 07007037.0
(22) Date of filing: 04.04.2007
(51) Int. Cl.: B44B 3/04, B24B 19/03, B24B 5/04, B29C 59/02

(54) **Process and equipment for the decoration by means of engraving on the external surface of objects made of plastic material**

(30) Priority: 05.04.2006 IT TO20060251
(71) Applicant: SERRALUNGA S.r.l., 13900 Biella (IT)
(72) Inventor: Sadler, Marc, 20144 Milano (IT)
(74) Representative: Lotti, Giorgio

(57) **Abstract**

Described herein is a process and equipment for decoration, by means of engraving, on the external surface of objects (10) made of plastic material, in particular having the shape of bodies of revolution, said process comprising a step of rotation of the product about an axis of revolution (x) thereof, and a step of removal of a portion of surface material of the product by running an abrasive tool (11) along the axis (X) of the product itself.

## Description

The invention relates to a process and to equipment for the decoration by means of engraving on the external surface of objects made of plastic material, in particular having the shape of bodies of revolution.

Products made of plastic material, such as containers, vases, lamps, etc. are normally decorated on the surface by means of painting, silk-screen printing, and other processes.

The purpose of the invention is to decorate plastic products of the type referred to above by means of engraving, instead of by means of painting or silk-screen printing.

If, then, the object to be decorated by means of engraving has an external surface of one colour and an internal layer of a different colour, if the engraving is made at a depth beyond the surface thickness, it will bring to light the colour of the internal layer so that the decoration will appear to be obtained by surface colouring of the product instead of by means of engraving.

For the above and further purposes that will be better understood hereinafter, the invention proposes providing a process for decoration by means of engraving on the external surface of objects made of plastic material, in particular having the shape of bodies of revolution, said process comprising a step of rotation of the product about an axis of revolution thereof, and a step of removal of a portion of surface material of the product by running an abrasive tool along the axis of the product itself.

The invention likewise proposes providing equipment for decoration, by means of engraving, on the external surface of objects made of plastic material, in particular having the shape of bodies of revolution, said equipment comprising means for supporting the product and setting it in rotation about an axis of revolution thereof, and means for removal of a portion of surface material of the product constituted by an abrasive tool that can move along said axis of revolution of the product itself.

The process and the equipment according to the invention will now be described with reference to the annexed plate of drawings, in which:

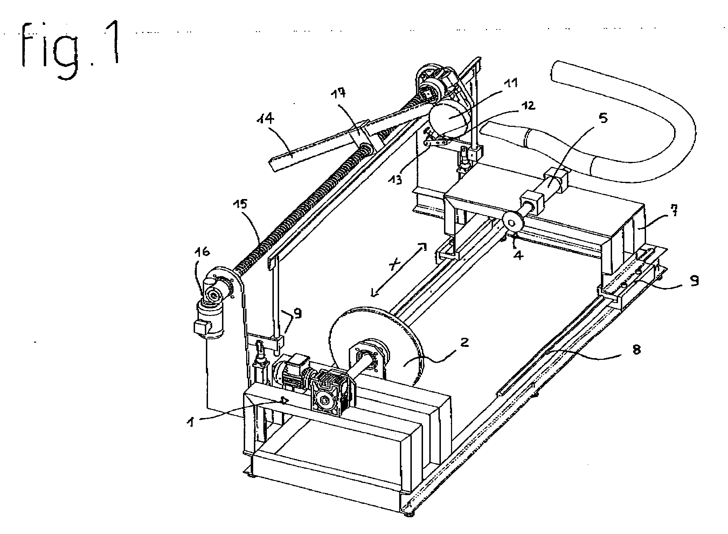

- Figure 1 is a perspective view of the equipment according to the invention;
- Figure 2 is a perspective view from a second side of a detail of the equipment of Figure 1;
- Figures 3, 4 and 5 are views similar to Figure 1, but with different decorative processes in progress;
- Figure 6 is an enlarged view of a detail of the equipment;
- Figure 7 is a view of a product obtained with the equipment of Figure 1; and
- Figure 8 is an enlarged view of a second detail of the equipment.

The process according to the invention for the surface decoration of products made of plastic material, in particular having the shape of bodies of revolution, comprises a step of rotation of the product about an axis of revolution thereof, and a step of removal of a strip of surface material of the product by running an abrasive tool along the axis of the product itself, the surface strip presenting advantageously, but not necessarily a colouring different from an immediately internal layer of the product itself.

The equipment according to the invention, which is designed for carrying out the aforesaid process, and hence for engraving across the surface of objects having a wide range of shapes (always, however, circular) and dimensions is constituted by a motor-reducer assembly 1 with a variable speed in a range that is to be defined.

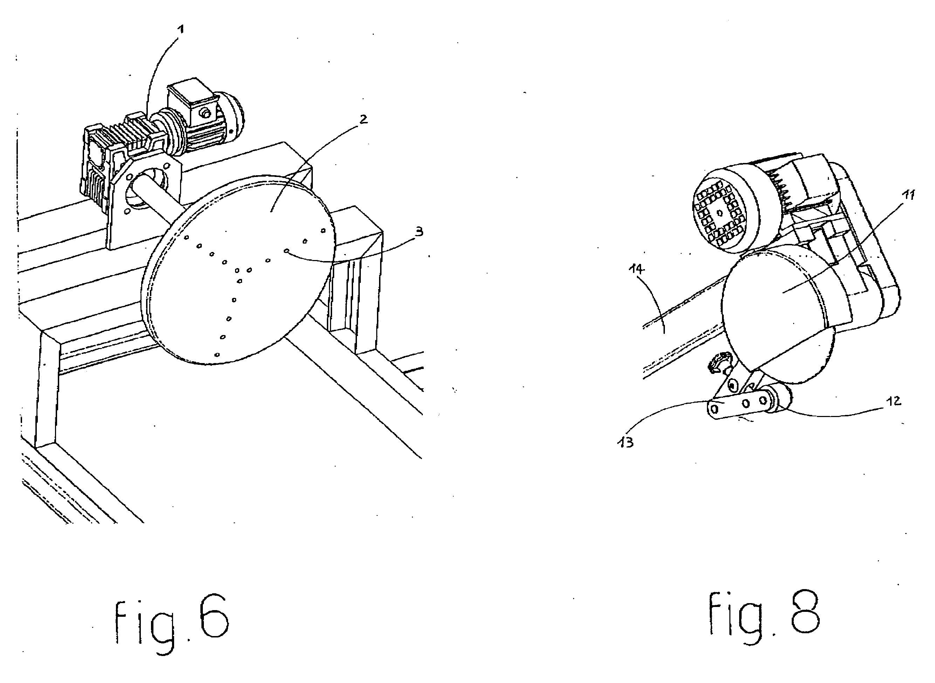

The aforesaid motor reducer moves a driving chuck 2, which, in turn, is constituted by a disk with mobile pins (see Figure 6) to be positioned in seats 3 according to the diameter of the object to be clamped.

On the opposite side, there is an adjustable rotating footstock 4, provided with pneumatically actuated adapters 5, which clamps the rotating object.

The object will hence be clamped by the driving chuck 2 on one side and by the footstock 4 on the other.

The footstock 4 is mounted on a mobile support 7, which can slide on longitudinal guides by means of carriages 9 and enables positioning of the footstock according to the length of the object to be treated.

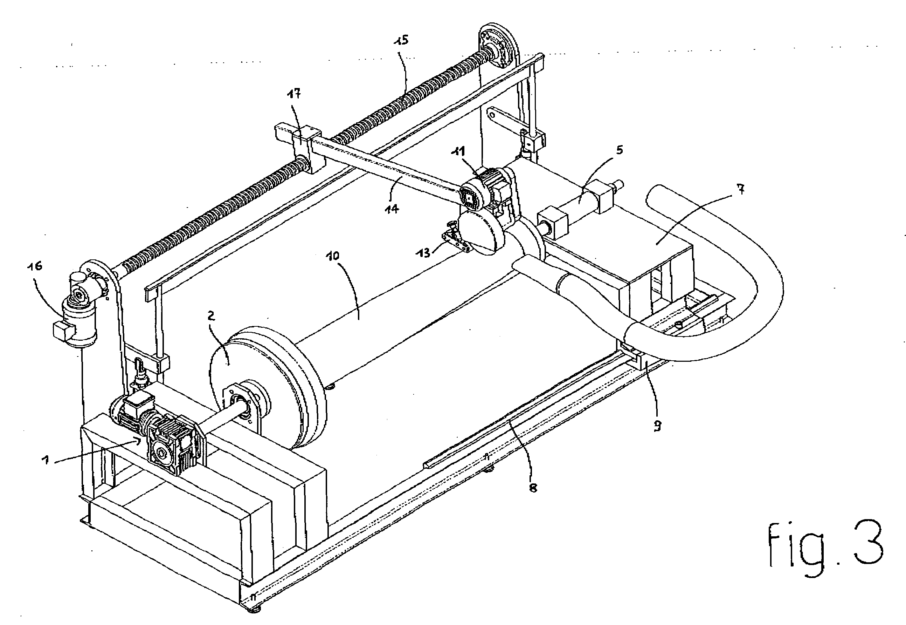

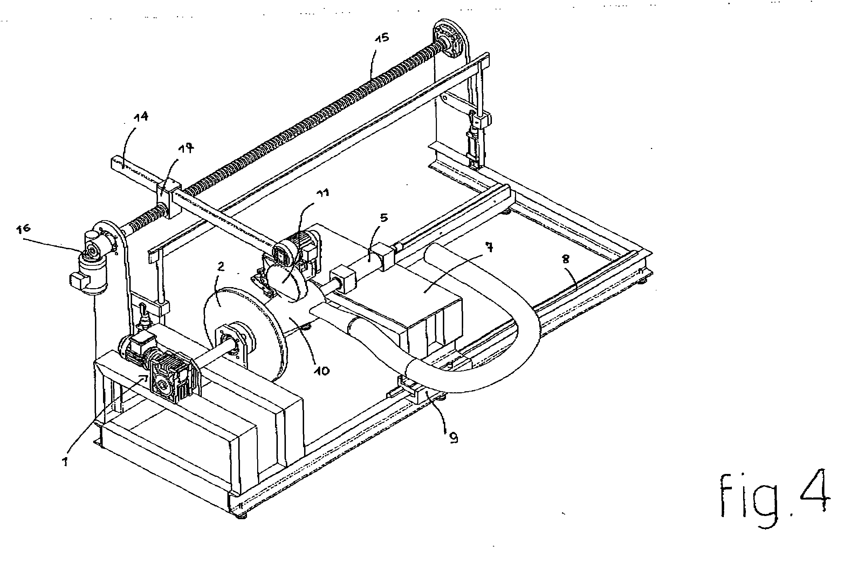

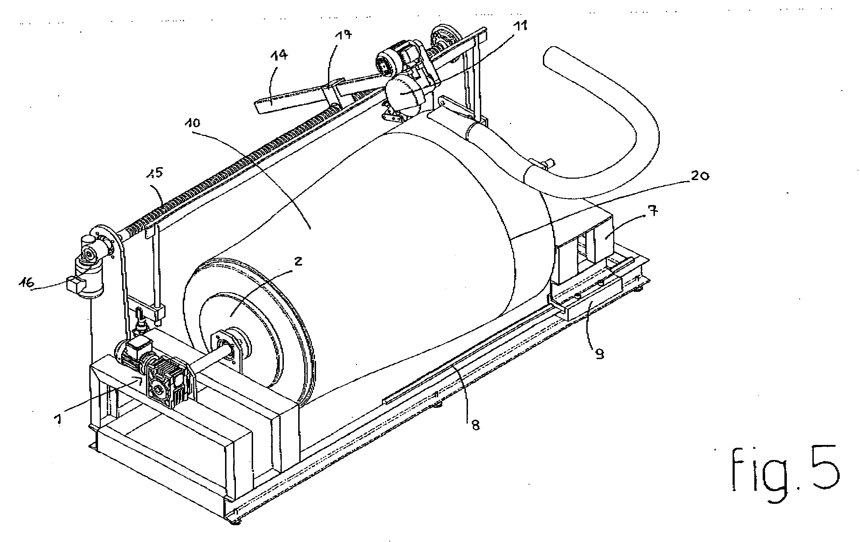

Illustrated in Figures 3, 4 and 5 are three types of objects 10: that of Figure 3 is long and thin, that of Figure 4 is short and thin, that of Figure 5 is long and of large diameter.

The object 10, clamped and made to rotate about a longitudinal X by means of the aforesaid motor reducer 1, is thus worked by means of continuous or broken engravings of any geometry by an abrasive head 11 provided with wheels 12 for copying the surface of the piece being worked, which are to be mounted on a rocker 13.

In Figure 5 there may be noted a first stretch of engraving 20 on the piece 10.

The head-wheels-rocker ensemble is mounted on a bar 14, which can slide along an axis parallel to the axis X of rotation of the object mounted between the chuck 2 and the footstock 4. For this purpose, the bar 14 is equipped with a threaded bushing 17 screwed on a rod 15, which is also threaded and is set in rotation by a motor 16, which can be managed by a PC or PLC program that enables variation of the step of advance.

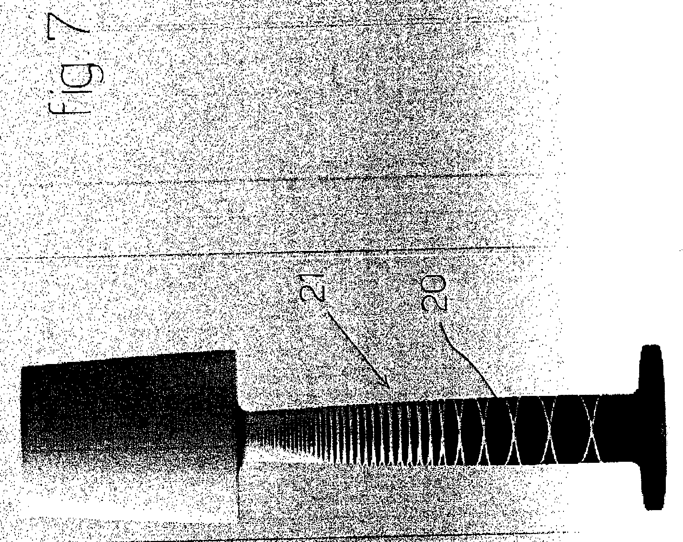

The above equipment thus enables an extremely wide range of forms of engraving 20 of the piece to be obtained, as illustrated, for example, in Figure 7, in which the foot 21 of the lamp having an external surface black bears light curved and intertwined engravings that thicken in the upward direction.

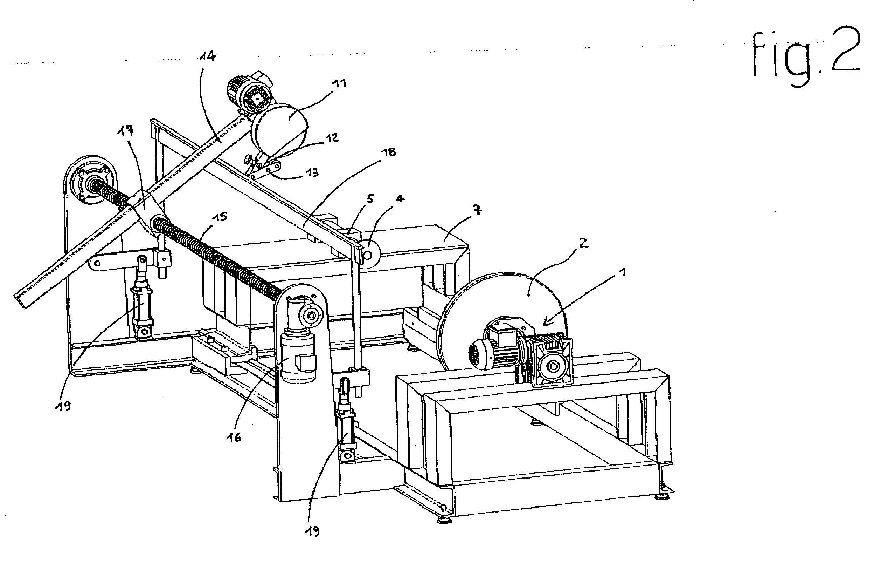

Furthermore, as may be noted in Figure 2, the arm 14 that carries the abrasive head 11 is adjustable in inclination by means of a structure constituted by a C frame controlled at its ends by cylinders 19, thus enabling variation of the height-depth of engraving of the tool on the object to be engraved.

The process according to the invention can be applied, for example, also in the case where the object to be engraved envisages low and/or high reliefs. In the first case, the tool can pass through the low relief without engraving it or also engraving it, even though to a lesser extent than the outer surface of the object, according to the aesthetic effect that it is desired to obtain.

An appropriate program could also be designed to get the tool to turn around the low relief, thus keeping it unaffected by the decorative engravings.

If, instead, it is a high relief, the tool can be made to pass around the low relief itself without affecting it or else also making an incision therein having a depth that can be the same as or different from the surface engraving according to the depth of the incision that is made with the tool in the area corresponding to the high relief.

## Claims

1. A process for decoration, by means of engraving, on the external surface of objects made of plastic material, in particular having the shape of bodies of revolution, said process comprising a step of rotation of the product about an axis of revolution thereof, and a step of removal of a portion of surface material of the product by running an abrasive tool along the axis of the product itself.

2. An object made of plastic material obtained by means of the process according to Claim 1.

3. The object made of plastic material obtained by means of the process according to Claim 2, **characterized in that** the portion of surface material has a colouring different from an immediately internal layer of the product itself that is not involved in the step of removal of the material.

4. Equipment for decoration, by means of engraving, on the external surface of objects made of plastic material, in particular having the shape of bodies of revolution, comprising means for supporting and setting in rotation the product (10) about an axis (X) of revolution thereof, and means for removal of a portion of surface material (20) of the product, constituted by a mobile abrasive tool (11) that moves along said axis (X) of revolution of the product itself.

5. The equipment according to Claim 4, **characterized in that** the means for supporting and setting in rotation the product (10) about an axis (X) of revolution thereof are constituted by a variable-speed motor-reducer assembly (1) that moves a driving chuck (2), and by an adjustable rotating foot stock (4), the rotating object being clamped between the chuck (2) and the foot stock (4).

6. The equipment according to Claim 5, **characterized in that** the footstock (4) is mounted on a mobile support (7), which can slide on longitudinal guides by means of carriages (9) and enables positioning of the footstock (4), according to the length of the object to be treated.

7. The equipment according to Claim 4, **characterized in that** the abrasive tool (11) is provided with wheels (12) for copying the surface, which are mounted on a rocker (13); the tool-wheels-rocker ensemble being mounted on a bar (14), which can slide along an axis parallel to the axis (X) of rotation of the object mounted between the chuck (2) and the footstock (4).

8. The equipment according to Claim 7, **characterized in that** the bar (14) is equipped with a threaded bushing (17) screwed on a rod (15), which is also threaded, said rod being set in rotation by a motor (16), which can be governed by a PC or PLC program that enables variation of the step of advance.

9. The equipment according to Claim 7, **characterized in that** the bar (14) that carries the abrasive head (11) is adjustable in inclination by means of a structure constituted by a C frame controlled at its ends by cylinders (19), thus enabling variation of the height-depth of engraving of the tool on the object to be engraved.
